(19)

**Europäisches Patentamt**
**European Patent Office**
**Office européen des brevets**

(11) **EP 4 752 847 A1**

(12) **EUROPEAN PATENT APPLICATION**

(43) Date of publication:
03.06.2026 Bulletin 2026/23

(21) Application number: 25219095.4

(22) Date of filing: 27.11.2025

(51) International Patent Classification (IPC):
*G06V 10/24* (2022.01)   *G06V 10/44* (2022.01)
*G06V 10/75* (2022.01)   *G06V 10/774* (2022.01)
*G06V 10/82* (2022.01)   *G06V 30/146* (2022.01)
*G06V 30/19* (2022.01)

(52) Cooperative Patent Classification (CPC):
G06V 30/19147; G06V 10/24; G06V 10/44;
G06V 10/754; G06V 10/757; G06V 10/774;
G06V 10/82; G06V 30/146; G06V 30/1904;
G06V 30/19067

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 28.11.2024 JP 2024207596

(71) Applicant: **Rakuten Group, Inc.**
**Setagaya-ku**
**Tokyo 158-0094 (JP)**

(72) Inventors:
• **LEE, Sehyung**
**Tokyo 158-0094 (JP)**
• **CHAE, Yeongnam**
**Tokyo 158-0094 (JP)**

(74) Representative: **EIP**
**Fairfax House**
**15 Fulwood Place**
**London WC1V 6HU (GB)**

(54) **LEARNING SYSTEM, LEARNING METHOD, AND PROGRAM**

(57) Provided is a technology for improving accuracy of processing of a target image. A training data acquisition module (103) of a learning system (1) acquires training data including, as an input portion, a training target image and a training reference image, and including, as a ground truth portion, ground truth information for processing the training target image so that a training target pose of a training target object coincides with a training reference pose of a training reference object. A first model storage unit (100) stores a first model that calculates a first training target feature and a first training reference feature, and outputs first training processing information. A second model storage unit (102) stores a second model that calculates a second training target feature and a second training reference feature, and outputs second training processing information based on the first training processing information, the second training target feature, and the second training reference feature. A training module (104) executes training of at least one of the first model or the second model based on the training data.

FIG.2

**Description**

BACKGROUND OF THE INVENTION

Field of the Invention

The present disclosure relates to a learning system, a learning method, and a program.

Description of the Related Art

Hitherto, there is known a technology for processing a target image showing a predetermined object. For example, in WO 2020/008628 A1, there is described a technology in which a feature point group extracted from a target image showing a document, which is an example of an object, is matched with a feature point group extracted from a sample image showing a sample document, and the target image is processed so that a positional relationship of the feature point group in the target image becomes or approaches a positional relationship of the feature point group in the sample image.

However, in the technology of WO 2020/008628 A1, it is required to extract a large number of feature points from the target image, and hence the target image cannot be processed with high accuracy when a sufficient number of feature points cannot be extracted from the target image. This also applies to the processing of a target image showing another object other than a document as in WO 2020/008628 A1. For that reason, with the related art, it has not been possible to sufficiently increase the accuracy of processing of the target image.

SUMMARY OF THE INVENTION

One object of the present disclosure is to improve accuracy of processing of a target image.

A learning system according to the present disclosure includes: a training data acquisition module configured to acquire training data including, as an input portion, a training target image showing a training target object and a training reference image showing a training reference object, and including, as a ground truth portion, ground truth information for processing the training target image so that a training target pose of the training target object coincides with a training reference pose of the training reference object; a first model storage unit configured to store a first model configured to calculate a first training target feature of the training target image and a first training reference feature of the training reference image, and to output first training processing information for processing the training target image so that the training target pose coincides with the training reference pose, based on the first training target feature and the first training reference feature; a second model storage unit configured to store a second model configured to calculate a second training target feature of the training target image and a second training reference feature of the training reference image, and to output second training processing information for processing the training target image so that the training target pose coincides with the training reference pose, based on the first training processing information, the second training target feature, and the second training reference feature; and a training module configured to execute training of at least one of the first model or the second model based on the training data.

An estimation system according to the present disclosure includes an estimation module configured to process, after training by the training module is completed, an estimation target image showing an estimation target object so that an estimation target pose of the estimation target object coincides with an estimation reference pose of an estimation reference object, based on the estimation target image, an estimation reference image showing the estimation reference object, the first model described above, and the second model described above.

According to the present disclosure, it is possible to improve the accuracy of processing of the target image.

BRIEF DESCRIPTION OF THE DRAWINGS

FIG. 1 is a diagram for illustrating an example of a hardware configuration of a learning system.
FIG. 2 is a diagram for illustrating an example of functions implemented by a learning system according to a first embodiment of the present disclosure.
FIG. 3 is a diagram for illustrating an example of a model to be trained in the first embodiment.
FIG. 4 is a table for showing an example of a training database.
FIG. 5 is a diagram for illustrating an example of how a training target image after processing is acquired.
FIG. 6 is a diagram for illustrating an example of a correspondence relationship of each pixel of the training target image between before and after processing.

FIG. 7 is a flow chart for illustrating an example of a process to be executed by the learning system according to the first embodiment.

FIG. 8 is a diagram for illustrating an example of functions implemented by an estimation system according to a second embodiment of the present disclosure.

FIG. 9 is a flow chart for illustrating an example of a process to be executed by the estimation system according to the second embodiment.

DESCRIPTION OF THE EMBODIMENTS

[1. First Embodiment]

A first embodiment of the present disclosure, which is an example of an embodiment of a learning system, learning method, and program according to the present disclosure, is described.

[1-1. Hardware Configuration of Learning System]

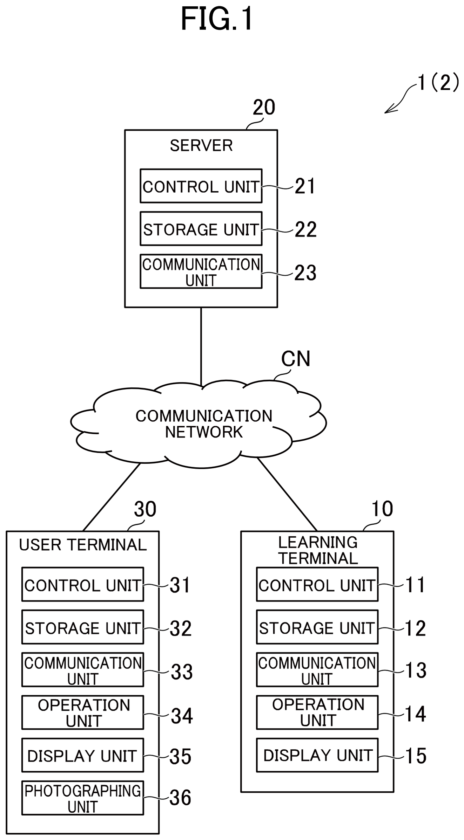

FIG. 1 is a diagram for illustrating an example of a hardware configuration of the learning system. For example, a learning system 1 includes a learning terminal 10, a server 20, and a user terminal 30. Each of the learning terminal 10, the server 20, and the user terminal 30 is connectable to a communication network CN, such as the Internet or a LAN. In an example described in a second embodiment of the present disclosure described later, each of those computers is included in an estimation system 2, and hence, in FIG. 1, the reference numeral of the estimation system 2 is written in parentheses after the reference numeral of the learning system 1.

The learning terminal 10 is a computer which executes training described later. For example, the learning terminal 10 is a personal computer, a server computer, a smartphone, or a tablet computer. The learning terminal 10 includes a control unit 11, a storage unit 12, a communication unit 13, an operation unit 14, and a display unit 15. The control unit 11 includes at least one processor. The storage unit 12 includes at least one of a volatile memory such as a RAM, or a non-volatile memory such as a flash memory. The communication unit 13 includes at least one of a communication interface for wired communication or a communication interface for wireless communication. The operation unit 14 is an input device such as a touch panel. The display unit 15 is a liquid crystal display or an organic EL display.

The server 20 is a server computer. The server 20 includes a control unit 21, a storage unit 22, and a communication unit 23. Hardware configurations of the control unit 21, the storage unit 22, and the communication unit 23 may be the same as those of the control unit 11, the storage unit 12, and the communication unit 13, respectively.

The user terminal 30 is a computer of a user. For example, the user terminal 30 is a personal computer, a smartphone, a tablet computer, or a wearable terminal. The user terminal 30 includes a control unit 31, a storage unit 32, a communication unit 33, an operation unit 34, a display unit 35, and a photographing unit 36. Hardware configurations of the control unit 31, the storage unit 32, the communication unit 33, the operation unit 34, and the display unit 35 may be the same as those of the control unit 11, the storage unit 12, the communication unit 13, the operation unit 14, and the display unit 15, respectively. The photographing unit 36 includes at least one camera.

Programs stored in the storage units 12, 22, and 32 may be supplied to the learning terminal 10, the server 20, and the user terminal 30, respectively, through the communication network CN. Moreover, the learning terminal 10, the server 20, or the user terminal 30 may include a reading unit (for example, an optical disc drive or a memory card slot) that reads a computer-readable information storage medium or an input/output unit (for example, a USB port) through which data is input from or output to an external device. For example, a program stored in the information storage medium may be supplied to the learning terminal 10, the server 20, or the user terminal 30 through the reading unit or the input/output unit.

Further, the hardware configuration of the learning system 1 is not limited to the example of FIG. 1. The learning system 1 is only required to include at least one computer. For example, the learning system 1 may include only the learning terminal 10 and the server 20. In this case, the user terminal 30 is present outside the learning system 1. The learning system 1 may include only the learning terminal 10. In this case, the server 20 and the user terminal 30 are present outside the learning system 1. The learning system 1 may include a computer not shown in FIG. 1.

[1-2. Outline of Learning System According to First Embodiment]

In the first embodiment, the learning system 1 executes training of a model for processing a target image so that a target pose of a target object in the target image coincides with a reference pose of a reference object in a reference image. A process at a time of estimation using a trained learning model is described in the second embodiment described later. In the first embodiment, a process up to creation of a trained learning model is described. First, meanings of respective terms are described.

The target image is an image to be processed. The processing is image processing to be executed on the target image. The processing can also be said to be shaping or deformation of the target image. For example, the processing may be movement, rotation, enlargement, reduction, trimming, or a combination thereof. The processing may be a change in pixel value, a change in brightness, a change in extension, or other processing. Image processing called affine transformation is also a type of processing. A change in a pixel arrangement is also a type of processing. In the first embodiment, a case in which the affine transformation corresponds to the processing is taken as an example, but the processing is not limited to the affine transformation. The processing may be all or a part of the above-mentioned examples.

The target object is an object shown in the target image. For example, when a photographed image generated by a camera corresponds to the target image, the target object is all or a part of a subject photographed by the camera. When a scanned image generated by a scanner corresponds to the target image, the target object is all or a part of an object read by the scanner. When a computer graphic (CG) image corresponds to the target image, the target object is all or a part of an object drawn in the CG image.

The target pose is at least one of an orientation, shape, or position of the target object in the target image. At least one of the orientation, shape, or position of the target object in the target image changes when a positional relationship between a viewpoint (for example, the camera, the scanner, or a virtual viewpoint) and the target object changes, and hence the target pose can also be said to be the positional relationship between the viewpoint and the target object.

The reference image is an image in which the reference object is shown in a predetermined pose. The predetermined pose is a desired pose for the target object in the target image after processing. The predetermined pose can also be said to be a goal pose or an appropriate pose. The reference image can also be said to be an image to be referred to when the target image is processed. The reference image can also be said to be an image to be used as a sample when the target image is processed.

The reference object is an object shown in the reference image. For example, when a photographed image generated by the camera corresponds to the reference image, the reference object is all or a part of a subject photographed by the camera. When a scanned image generated by the scanner corresponds to the reference image, the reference object is all or a part of an object read by the scanner. When a CG image corresponds to the reference image, the reference object is all or a part of an object drawn in the CG image.

The reference pose is at least one of an orientation, shape, or position of the reference object in the reference image. The predetermined pose described above corresponds to the reference pose. At least one of the orientation, shape, or position of the reference object in the reference image changes when a positional relationship between the viewpoint (for example, the camera, the scanner, or the virtual viewpoint) and the reference object changes, and hence the reference pose can also be said to be the positional relationship between the viewpoint and the reference object.

In the first embodiment, the target image, the target object, the target pose, the reference image, the reference object, and the reference pose at a time of training are referred to as "training target image," "training target object," "training target pose," "training reference image," "training reference object," and "training reference pose," respectively. The learning system 1 executes the training of a model for processing the training target image so that the training target pose of the training target object in the training target image coincides with the training reference pose of the training reference object in the training reference image. Details of the learning system 1 are described below.

[1-3. Functions implemented by Learning System According to First Embodiment]

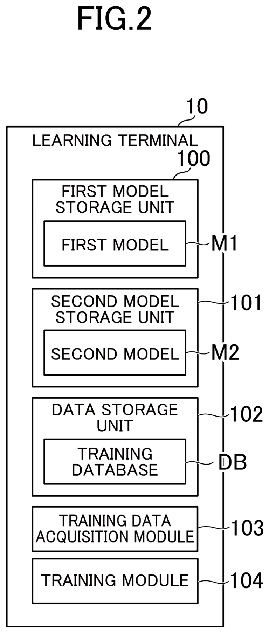

FIG. 2 is a diagram for illustrating an example of functions implemented by the learning system 1 according to the first embodiment. In the first embodiment, functions implemented by the learning terminal 10 among the functions implemented by the learning system 1 are described. For example, the learning terminal 10 includes a first model storage unit 100, a second model storage unit 101, a data storage unit 102, a training data acquisition module 103, and a training module 104. The first model storage unit 100, the second model storage unit 101, and the data storage unit 102 are implemented by the storage unit 12. The training data acquisition module 103 and the training module 104 are implemented by the control unit 11.

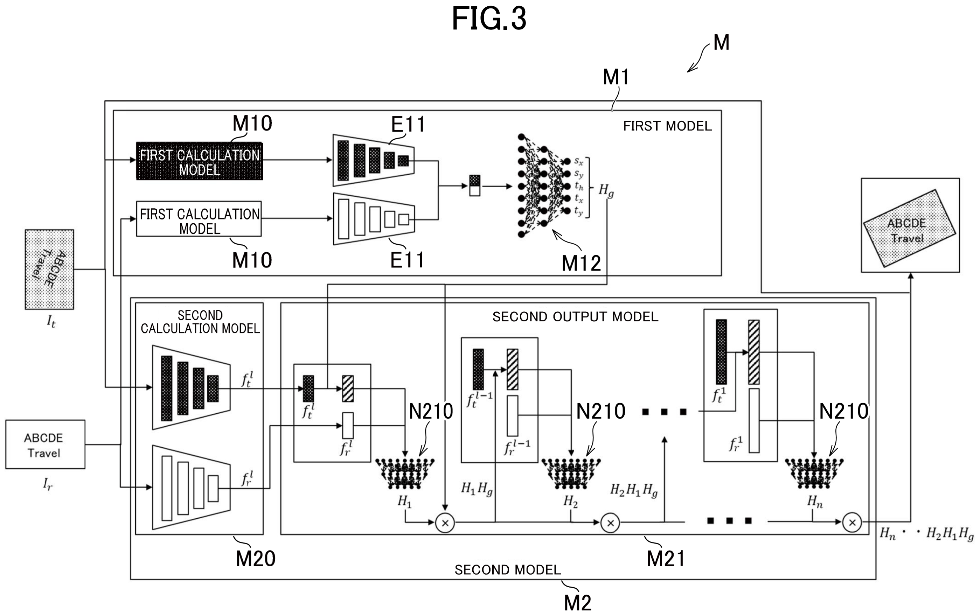

FIG. 3 is a diagram for illustrating an example of a model to be trained in the first embodiment. As illustrated in FIG. 3, a model M to be trained in the first embodiment includes a first model M1 and a second model M2. When the first model M1 and the second model M2 are not particularly distinguished from each other, the first model M1 and the second model M2 are simply referred to as "model M." The model M can also be said to be a concept that includes the first model M1 and the second model M2. In FIG. 3, a training target image It and a training reference image $I_r$ are illustrated. Details of the respective functions of FIG. 2 are described below with reference to FIG. 3. The processing of the training target image It may be executed inside at least one of the first model M1 or the second model M2, or a separate program for processing may be present. In the first embodiment, a case in which the processing is executed by a separate program is taken as an example.

In the first embodiment, a case in which the training target object and the training reference object are each a logo is taken as an example. The logo is a character, a symbol, a number, a graphic form, a pattern, a color, or a combination thereof. The logo may represent a name of a service, a company, a local government, or another organization. The logo may be formed on a physical medium such as a credit card or paper, or may not particularly be formed on the physical medium. The training target object and the training reference object may be any objects, and are not limited to logos. For example, the training target object and the training reference object may be a character that is not a logo, all or a part of an identity verification document, all or a part of a document other than an identity verification document, or an icon.

The first model M1 and the second model M2 can be used for any purpose. For example, the first model M1 and the second model M2 may be applied to electronic know your customer (eKYC). The first model M1 and the second model M2 may be used to correct the pose of a logo when the logo is included in an identity verification document in eKYC. For example, the first model M1 and the second model M2 may be used for possession-based authentication in a payment service. When a credit card is used for possession-based authentication, the first model M1 and the second model M2 may be used to correct the pose of a logo representing a credit card company that has issued the credit card. The first model M1 and the second model M2 may be used to determine whether or not a logo of an affiliated store that is affiliated with a certain service (for example, a payment service) is in a correct pose.

[First Model Storage Unit]

The first model storage unit 100 stores the first model M1. The first model M1 includes a program developed by a machine learning method. The machine learning method may be any method used in an image processing field. The first model M1 may be developed by a supervised learning method, an unsupervised learning method, or a combination thereof. For example, the first model M1 may include a program developed by a neural network, vision transformer (ViT), scale-invariant feature transform (SIFT), speeded up robust features (SURF), histogram of oriented gradients (HOG), or another method.

For example, the first model M1 includes a program indicating a series of information processing steps on an image input to the first model M1, and parameters to be referred to by the program. The parameters may be incorporated into a part of the program. The parameters of the first model M1 may be any parameters used in the machine learning method. For example, the parameters of the first model M1 may be weights, biases, or other parameters. The parameters of the first model M1 may be any parameters adopted in each method such as the neural network described above.

For example, the first model storage unit 100 stores the pre-trained first model M1 (the first model M1 before being subjected to training by the training module 104). The pre-trained first model M1 is the first model M1 having parameters set to initial values. All or a part of the pre-trained first model M1 may have been pre-trained to some extent. When the training of the first model M1 is performed, the initial value parameters are adjusted. When the training of the first model M1 is completed, the first model storage unit 100 stores the trained first model M1. The pre-trained first model M1 may be overwritten with the trained first model M1, or the trained first model M1 may be stored in the first model storage unit 100 separately from the pre-trained first model M1.

In the first embodiment, the first model M1 calculates a first training target feature of the training target image It and a first training reference feature of the training reference image $I_r$, and outputs first training processing information $H_g$ for processing the training target image It so that the training target pose coincides with the training reference pose, based on the first training target feature and the first training reference feature. The series of those information processing steps is indicated in the program of the first model M1. In the series of those information processing steps, the parameters of the first model M1 are referred to.

For example, the first model M1 calculates the first training target feature of the training target image It based on the parameters of the first model M1. The first training target feature is a feature of the training target image It calculated by the first model M1. The first training target feature can also be said to be information for a computer to recognize the feature of the training target image It. The first training target feature is sometimes called an embedded representation or a feature amount of the training target image It. The first training target feature may be in any format. For example, the first training target feature may be a feature map, a vector, an array, a single numerical value, a combination of a plurality of numerical values, or a matrix, or may be in another format.

For example, the first model M1 calculates the first training reference feature of the training reference image $I_r$ based on the parameters of the first model M1. The first training reference feature is a feature of the training reference image $I_r$ calculated by the first model M1. The first training reference feature can also be said to be information for a computer to recognize the feature of the training reference image $I_r$. The first training reference feature is sometimes called an embedded representation or a feature amount of the training reference image $I_r$. The first training reference feature may be in any format. For example, the first training reference feature may be a feature map, a vector, an array, a single numerical value, a combination of a plurality of numerical values, or a matrix, or may be in another format.

For example, the first model M1 outputs the first training processing information $H_g$ based on the parameters of the first model M1, the first training target feature, and the first training reference feature. The output of the first training processing information $H_g$ may be output to the outside of the first model M1 (for example, to the second model M2), or may be output from a certain configuration to another configuration of the first model M1 (output from a certain layer to another layer of the first model M1).

The first training processing information $H_g$ is information for processing, which has been calculated by the first model M1. The first training processing information $H_g$ can also be said to be a coefficient (parameter) referred to at a time of processing. For example, when the affine transformation corresponds to the processing, a transformation coefficient in the affine transformation corresponds to the first training processing information $H_g$. When a change in the arrangement of each pixel corresponds to the processing, the positional relationship of each pixel before and after the change corresponds to the first training processing information $H_g$. The first training processing information $H_g$ may be any information to be referred to at the time of processing, and is not limited to those examples. The first training processing information $H_g$ may be a translation amount, a rotation amount, an enlargement ratio, a reduction ratio, a trimming range, or a combination thereof.

In the first embodiment, a case in which the first model M1 includes a first calculation model M10, a first encoder E11, and a first output model M12 is taken as an example. The first model M1 may include only the first calculation model M10 and the first output model M12 without including the first encoder E11. The first model M1 including only the first calculation model M10 and the first output model M12 without including the first encoder E11 is also within the scope of the present disclosure.

The first calculation model M10 calculates the first training target feature based on the training target image It, and calculates the first training reference feature based on the training reference image $I_r$. In the example of FIG. 3, two first calculation models M10 are illustrated for the sake of description, but in the first embodiment, a case in which the number of first calculation models M10 is one is taken as an example. That is, the two first calculation models M10 of FIG. 3 are the identical first calculation model M10 that is present as one.

The first calculation model M10 may be any model that calculates a feature of an image input to the first calculation model M10, and any machine learning method may be used. In the first embodiment, a case in which the first calculation model M10 is distillation of novel object representations (DINO) is taken as an example, but the first calculation model M10 may be a model developed by another machine learning method. For example, the first calculation model M10 may be a model developed by another neural network method other than the DINO, namely, ViT, SIFT, SURF, or HOG. The first calculation model M10 may be a model developed by a method called a backbone network.

The first calculation model M10 may be a trained model in which other training objects different from the training target object and the training reference object have been learned. The other training objects are objects to be pre-learned. The other training objects may be any objects. For example, the other training objects may be characters, numbers, symbols, graphic forms, or other objects. The other training objects may be objects representing a general shape. The DINO in the first embodiment has learned general characters, and thus is a trained model in which characters, which are an example of the other training objects, have been learned. The first calculation model M10 has learned features of training images showing the other training objects. The first calculation model M10 may be a model that is published, for a fee or free of charge, by a third-party organization.

For example, the first calculation model M10 calculates the first training target feature based on the training target image It, which has been input to the first calculation model M10, and the parameters of the first calculation model M10. The first calculation model M10 may calculate the first training target feature by performing convolution on the training target image It. The first calculation model M10 calculates the first training reference feature based on the training reference image $I_r$, which has been input to the first calculation model M10, and the parameters of the first calculation model M10. The first calculation model M10 may calculate the first training reference feature by performing convolution on the training reference image $I_r$. Any calculation method used in the machine learning method may be used as a calculation method for the first calculation model M10 to calculate the first training target feature and the first training reference feature.

The first model M1 may include a plurality of first calculation models M10. For example, the first model M1 may include a first calculation model M10 to which the training target image It is input and to which the training reference image $I_r$ is not input (a first calculation model M10 that performs only the calculation of the first training target feature) and a first calculation model M10 to which the training reference image $I_r$ is input and to which the training target image It is not input (a first calculation model M10 that performs only the calculation of the first training reference feature). The parameters of those two first calculation models M10 may be mutually independent and separate parameters. The first model M1 may include three or more first calculation models M10.

The first encoder E11 reduces dimensions of the first training target feature and the first training reference feature calculated by the first calculation model M10. In the example of FIG. 3, two first encoders E11 are illustrated for the sake of description, but in the first embodiment, a case in which the number of first encoders E11 is one is taken as an example. That is, the two first encoders E11 of FIG. 3 are the identical first encoder E11 that is present as one. In the example of FIG. 3, the arrows extending from the first calculation model M10 to the first encoder E11 indicate that the first training target feature and the first training reference feature are input from the first calculation model M10 to the first encoder E11.

Reducing the dimensions of the first training target feature and the first training reference feature may also be reducing sizes of the first training target feature and the first training reference feature. For example, reducing a size of a feature map or reducing the number of dimensions of a vector corresponds to reducing the dimensions. The first encoder E11 may use any machine learning method for reducing the dimensions. For example, the first encoder E11 may be a neural network that performs convolution. The first encoder E11 reduces the dimensions of the first training target feature and the first training reference feature based on the first training target feature and the first training reference feature, which have been input to the first encoder E11, and the parameters of the first encoder E11.

The first encoder E11 may include a plurality of layers that indicate information processing for reducing the dimensions. A parameter to be referred to in the individual layer may be present for each individual layer of the first encoder E11. Each layer of the first encoder E11 reduces the dimensions of the first training target feature and the first training reference feature calculated by a layer previous to the each layer, and outputs the result to a layer next to the each layer. The first encoder E11 sequentially executes processing for reducing the dimensions in a plurality of layers, and outputs the final first training target feature and first training reference feature. In the example of FIG. 3, the number of layers of the first encoder E11 is five, but the number of layers of the first encoder E11 may be any number. For example, the number of layers of the first encoder E11 may be one to four, or may be six or more.

In addition, the first model M1 may include a plurality of encoders E11. For example, the first model M1 may include an encoder E11 that reduces the dimensions of the first training target feature but does not reduce the dimensions of the first training reference feature (an encoder E11 that performs only processing on the first training target feature) and an encoder E11 that reduces the dimensions of the first training reference feature but does not reduce the dimensions of the first training target feature (an encoder E11 that performs only processing on the first training reference feature). The parameters of those two encoders E11 may be mutually independent and separate parameters. The first model M1 may include three or more encoders E11.

The first output model M12 outputs the first training processing information $H_g$ based on the first training target feature and the first training reference feature. The first output model M12 may use any machine learning method in which input and output having a correlation are learned. For example, the first output model M12 may be a neural network. The first output model M12 outputs the first training processing information $H_g$ based on the first training target feature and the first training reference feature, which have been input to the first output model M12, and the parameters of the first output model M12. The output of the first training processing information $H_g$ may be output to the outside of the first output model M12 (for example, to the second model M2), or may be output from a certain configuration to another configuration of the first output model M12 (output from a certain layer to another layer of the first output model M12).

In the first embodiment, a case in which the first model M1 further includes the first encoder E11 in addition to the first calculation model M10 and the first output model M12 is taken as an example, and hence the first output model M12 outputs the first training processing information $H_g$ based on the first training target feature and the first training reference feature that have dimensions reduced by the first encoder E11. In the example of FIG. 3, the arrows extending from the first encoder E11 to the first output model M12 indicate that the first training target feature and the first training reference feature that have dimensions reduced are input from the first encoder E11 to the first output model M12.

For example, the first output model M12 outputs the first training processing information $H_g$ based on the first training target feature and the first training reference feature that have dimensions reduced, which have been input to the first output model M12, and the parameters of the first output model M12. In the example of FIG. 3, the first training processing information $H_g$ includes five parameters $s_x$, $s_y$, $t_h$, $t_x$, and $t_y$. The parameters $s_x$ and $s_y$ are enlargement ratios in a horizontal direction and a vertical direction, respectively. The parameter $t_h$ is a rotation amount. The parameters $t_x$ and $t_y$ are movement amounts in the horizontal direction and the vertical direction, respectively. In the first embodiment, a case in which the affine transformation corresponds to the processing is taken as an example, and hence the affine transformation is controlled by those five parameters $s_x$, $s_y$, $t_h$, $t_x$, and $t_y$. The first training processing information $H_g$ may indicate only a part of those five parameters $s_x$, $s_y$, $t_h$, $t_x$, and $t_y$. For example, the first training processing information $H_g$ may indicate only the parameter $t_h$, or may indicate only the parameters $t_x$ and $t_y$.

The first model M1 is not required to include the first encoder E11. When the first model M1 does not include the first encoder E11, the first output model M12 may output the first training processing information $H_g$ based on the first training target feature and the first training reference feature calculated by the first calculation model M10 (the first training target feature and the first training reference feature that have dimensions unreduced by the first encoder E11). In this manner, a mode in which the first model M1 includes the first calculation model M10 and the first output model M12 without including the first encoder E11 is also within the scope of the present disclosure.

Further, the configuration of the first model M1 is not limited to the example of FIG. 3. For example, the first model M1 may include only one network instead of being divided into a plurality of networks such as the first calculation model M10, the first encoder E11, and the first output model M12. When the first model M1 includes only one network, the one network may calculate the first training target feature and the first training reference feature based on the training target image It and the training reference image $I_r$, and may output the first training processing information $H_g$ based on the first training target feature and the first training reference feature. The series of those information processing steps may be defined in a program of the network, and the parameters of the network may be referred to by the program.

[Second Model Storage Unit]

The second model storage unit 101 stores the second model M2. The second model M2 includes a program developed by a machine learning method. The machine learning method may be any method used in the image processing field. The second model M2 may be developed by a supervised learning method, an unsupervised learning method, or a combination thereof. For example, the second model M2 may be a model developed by a neural network, ViT, SIFT, SURF, HOG, or another method.

For example, the second model M2 includes a program indicating a series of information processing steps on an image input to the second model M2, and parameters to be referred to by the program. The parameters may be incorporated into a part of the program. The parameters of the second model M2 may be any parameters used in the machine learning method. For example, the parameters of the second model M2 may be weights, biases, or other parameters. The parameters of the second model M2 may be any parameters adopted in each method such as the neural network described above.

For example, the second model storage unit 101 stores the pre-trained second model M2 (the second model M2 before being subjected to training by the training module 104). The pre-trained second model M2 is the second model M2 having parameters set to initial values. All or a part of the pre-trained second model M2 may have been pre-trained to some extent. When the training of the second model M2 is performed, the initial value parameters are adjusted. When the training of the second model M2 is completed, the second model storage unit 101 stores the trained second model M2. The pre-trained second model M2 may be overwritten with the trained second model M2, or the trained second model M2 may be stored in the second model storage unit 101 separately from the pre-trained second model M2.

In the first embodiment, the second model M2 calculates a second training target feature of the training target image It and a second training reference feature of the training reference image $I_r$, and outputs second training processing information $H_n...H_2H_1H_g$ for processing the training target image It so that the training target pose coincides with the training reference pose, based on the first training processing information $H_g$, the second training target feature, and the second training reference feature. The series of those information processing steps is indicated in the program of the second model M2. In the series of those information processing steps, the parameters of the second model M2 are referred to.

For example, the second model M2 calculates the second training target feature of the training target image It based on the parameters of the second model M2. The second training target feature is a feature of the training target image It calculated by the second model M2. The second training target feature can also be said to be information for a computer to recognize the feature of the training target image It. The second training target feature is sometimes called an embedded representation or a feature amount of the training target image It. The second training target feature may be in any format. For example, the second training target feature may be a feature map, a vector, an array, a single numerical value, a combination of a plurality of numerical values, or a matrix, or may be in another format.

For example, the second model M2 calculates the second training reference feature of the training reference image $I_r$ based on the parameters of the second model M2. The second training reference feature is a feature of the training reference image $I_r$ calculated by the second model M2. The second training reference feature can also be said to be information for a computer to recognize the feature of the training reference image $I_r$. The second training reference feature is sometimes called an embedded representation or a feature amount of the training reference image $I_r$. The second training reference feature may be in any format. For example, the second training reference feature may be a feature map, a vector, an array, a single numerical value, a combination of a plurality of numerical values, or a matrix, or may be in another format.

For example, the second model M2 outputs the second training processing information $H_n...H_2H_1H_g$ based on the parameters of the second model M2, the first training processing information $H_g$, the second training target feature, and the second training reference feature. The output of the second training processing information $H_n...H_2H_1H_g$ may be output to the outside of the second model M2 (for example, to a program for processing), or may be output from a certain configuration to another configuration of the second model M2 (output from a certain layer to another layer of the second model M2).

The second training processing information $H_n...H_2H_1H_g$ is information for processing, which has been calculated by the second model M2. The second training processing information $H_n...H_2H_1H_g$ can also be said to be a coefficient (parameter) referred to at the time of processing. For example, when the affine transformation corresponds to the processing, a transformation coefficient in the affine transformation corresponds to the second training processing information $H_n...H_2H_1H_g$. When a change in the arrangement of each pixel corresponds to the processing, the positional relationship of each pixel before and after the change corresponds to the second training processing information $H_n...H_2H_1H_g$. The second training processing information $H_n...H_2H_1H_g$ may be any information to be referred to at the time of processing, and is not limited to those examples. The second training processing information $H_n...H_2H_1H_g$ may be the translation amount, the rotation amount, the enlargement ratio, the reduction ratio, the trimming range, or a combination thereof.

For example, the second model M2 processes the second training target feature based on the first training processing information $H_g$, and outputs the second training processing information $H_n...H_2H_1H_g$ based on the processed second training target feature and the second training reference feature. The first training processing information $H_g$ is information indicating rough processing details, and the second training processing information $H_n...H_2H_1H_g$ is information indicating final processing details. The portion of $H_n...H_2H_1$ in the second training processing information $H_n...H_2H_1H_g$ is a portion for fine adjustment that compensates for the fact that the accuracy cannot be sufficiently improved with the first training processing information $H_g$ alone (a portion for improving the accuracy of processing with the first training processing information $H_g$).

In the first embodiment, the second model M2 includes a second calculation model M20 and a second output model M21. The second calculation model M20 calculates the second training target feature based on the training target image It, and calculates the second training reference feature based on the training reference image $I_r$. In the example of FIG. 3, two second calculation models M20 are illustrated for the sake of description, but in the first embodiment, a case in which the number of second calculation models M20 is one is taken as an example. That is, the two second calculation models M20 of FIG. 3 are the identical second calculation model M20 that is present as one.

The second calculation model M20 may be any model that calculates a feature of an image input to the second calculation model M20, and any machine learning method may be used. In the first embodiment, a case in which the second calculation model M20 is an encoder is taken as an example. For example, the second calculation model M20 may be a neural network that performs convolution. The second calculation model M20 calculates the second training target feature and the second training reference feature based on the training target image It and the training reference image $I_r$, which have been input to the second calculation model M20, and the parameters of the second calculation model M20.

The second model M2 may include a plurality of second calculation models M20. For example, the second model M2 may include a second calculation model M20 to which the training target image It is input and to which the training reference image $I_r$ is not input (a second calculation model M20 that performs only the calculation of the second training target feature) and a second calculation model M20 to which the training reference image $I_r$ is input and to which the training target image It is not input (a second calculation model M20 that performs only the calculation of the second training reference feature). The parameters of those two second calculation models M20 may be mutually independent and separate parameters. The second model M2 may include three or more second calculation models M20.

In the first embodiment, the second calculation model M20 includes a plurality of layers that calculate the second training target feature and the second training reference feature. In the example of FIG. 3, a second calculation model M20 having four layers is illustrated, but the number of layers of the second calculation model M20 is not limited to four. For example, the second calculation model M20 may have one layer, two layers, or three layers, or may be a model having five or more layers. For example, the second calculation model M20 may calculate the second training target feature and the second training reference feature in each individual layer by sequentially performing convolution in the plurality of layers. In the example of FIG. 3, the size of a rectangle indicating each layer included in the second calculation model M20 and the size of a rectangle included in the second output model M21 correspond to each other.

In the example of FIG. 3, a second training target feature $f_t^l$ and a second training reference feature $f_r^l$ calculated by the last layer of the plurality of layers are indicated by the arrows extending from the second calculation model M20 to the second output model M21. The "l" of $f_t^l$ and $f_r^l$ is any numerical value of from 1 to "n". The "n" is the number (4 in the example of FIG. 3) of layers included in the second calculation model M20. In the example of FIG. 3, a case in which the numerical values of "l" and "n" are the same is illustrated.

For example, the respective layers of the second calculation model M20 may sequentially reduce the dimensions of the second training target feature and the second training reference feature. Each layer of the second calculation model M20 calculates a feature based on a feature calculated by a layer previous to the each layer and the parameters of the each layer. Each layer of the second calculation model M20 is sometimes called a convolution layer. Each layer of the second calculation model M20 may include a layer other than a convolution layer (for example, a layer of an activation function, a pooling layer, or a normalization layer). The configuration of the second calculation model M20 may be the same as that of a publicly-known encoder. For example, the second calculation model M20 may be a module called a target-aware feature extractor.

The second calculation model M20 is not required to reduce the dimensions of the second training target feature and the second training reference feature. The second calculation model M20 is not particularly required to include a plurality of layers. The second calculation model M20 may include only one layer. The second calculation model M20 may be a model that can calculate a feature of an image input to the second calculation model M20 without a concept of a layer. A mode in which the second calculation model M20 does not include a plurality of layers is also within the scope of the present disclosure.

In the first embodiment, the second output model M21 outputs the second training processing information $H_n...H_2H_1H_g$ based on the first training processing information $H_g$, the second training target feature, and the second training reference feature. The second output model M21 may use any machine learning method in which input and output having a correlation are learned. For example, the second output model M21 may be a neural network. The second output model M21 outputs the second training processing information $H_n...H_2H_1H_g$ based on the second training target feature and the second training reference feature, which have been input to the second output model M21, and the parameters of the second output model M21. The output of the second training processing information $H_n...H_2H_1H_g$ may be output to the outside of the second output model M21 (for example, to a program for processing), or may be output from a certain configuration to another configuration of the second output model M21 (for example, output from a layer that calculates the second training processing information $H_n...H_2H_1H_g$ in the second output model M21 to a layer that processes the training target image It in the second output model M21).

In the first embodiment, the second output model M21 sequentially calculates second intermediate training processing information pieces, which represent intermediate stages of the second training processing information, across the plurality of layers based on the first training processing information $H_g$ and the second training target feature and the second training reference feature calculated by the plurality of layers, and outputs second final training processing information, which represents a final stage of the second training processing information. $H_1$, $H_2$, ..., and $H_n$ of FIG. 3 are examples of the second intermediate training processing information pieces.

In the example of FIG. 3, each of the second intermediate training processing information pieces $H_1$, $H_2$, ..., and $H_n$ is assumed to include five parameters $s_y$, $s_y$, $t_h$, $t_x$, and $t_y$, similarly to the first training processing information $H_g$. The number of parameters included in each of the second intermediate training processing information pieces $H_1$, $H_2$, ..., and $H_n$ and the number of parameters included in the first training processing information $H_g$ may be different. The $H_n...H_2H_1H_g$ of FIG. 3 is an example of the second final training processing information. The second final training processing information may have any multiplication order, such as $H_gH_n...H_2H_1$.

For example, the second output model M21 acquires the second training target feature ($f_t^l$ in the example of FIG. 3) and the second training reference feature ($f_r^l$ in the example of FIG. 3) calculated by the last layer (the fourth layer in the example of FIG. 3) among the plurality of layers of the second calculation model M20. The second output model M21 transforms the second training target feature calculated by the last layer based on the first training processing information $H_g$. When the second training target feature is a feature map, the second output model M21 processes the second training target feature based on the first training processing information $H_g$.

In the example of FIG. 3, the second training target feature after processing is indicated by a shaded rectangle. The processing of the second training target feature may be executed by a method called feature warping. The second training target feature after processing represents a feature after processing indicated by the first training processing information $H_g$ is performed on the second training target feature before processing. When the second training target feature is information in a format other than the feature map, the second output model M21 may transform the second training target feature so that the processing indicated by the first training processing information $H_g$ is performed.

For example, the second output model M21 inputs the second training target feature after processing and the second training reference feature to a neural network N210. In the example of FIG. 3, the second output model M21 includes a plurality of neural networks N210. Each individual neural network N210 is designed to be able to receive input corresponding to the size of the second training target feature and the second training reference feature calculated by each layer of the second calculation model M20. For example, the second output model M21 may include the same number of neural networks N210 as the number of layers included in the second calculation model M20. That is, the second output model M21 may include "n" neural networks N210. The parameters of each individual neural network N210 are separate parameters independent of the parameters of the other neural networks N210.

In the example of FIG. 3, the second training target feature after processing, which has been calculated by the last layer of the second calculation model M20 and processed with the first training processing information $H_g$, and the second training reference feature, which has been calculated by the last layer of the second calculation model M20, are input to the leftmost neural network N210. The leftmost neural network N210 calculates those features based on the parameters of the leftmost neural network N210, and performs output corresponding to the features. In the example of FIG. 3, the output of the leftmost neural network N210 is the second intermediate training processing information piece $H_1$. The second intermediate training processing information piece $H_1$ represents a coefficient for processing corresponding to the second training target feature after processing and the second training reference feature, which have been input to the leftmost neural network N210.

For example, the second output model M21 calculates information $H_1H_g$ by multiplying the first training processing information $H_g$ and the second intermediate training processing information piece $H_1$ output from the leftmost neural network N210. The second output model M21 processes the second training target feature ($f_t^{l-1}$ in the example of FIG. 3) calculated by the second-to-last layer of the second calculation model M20 based on the calculated information $H_1H_g$.

For example, the second output model M21 inputs the second training target feature after processing and the second training reference feature ($f_r^{l-1}$ in the example of FIG. 3) calculated by the second-to-last layer of the second calculation model M20 to the second neural network N210 from the left of FIG. 3. The second neural network N210 from the left calculates those features based on the parameters of the second neural network N210 from the left, and performs output corresponding to the features. In the example of FIG. 3, the output of the second neural network N210 from the left is the second intermediate training processing information piece $H_2$. The second intermediate training processing information piece $H_2$ represents a coefficient for processing corresponding to the second training target feature after processing and the second training reference feature, which have been input to the second neural network N210 from the left.

In the same manner in the following, the second output model M21 sequentially calculates the second intermediate training processing information pieces $H_3$, ..., and $H_n$ up to the first layer of the second calculation model M20. The second output model M21 outputs the second final training processing information $H_n...H_2H_1H_g$ at the final stage. In this manner, the second output model M21 calculates the second intermediate training processing information pieces $H_1$, ..., and $H_n$ as information for the fine adjustment that compensates for the fact that only the first training processing information $H_g$ is insufficient, based on the second training target feature and the second training reference feature calculated by each layer of the second calculation model M20. The second final training processing information $H_n...H_2H_1H_g$ reflects not only the first training processing information $H_g$ but also the second intermediate training processing information pieces $H_1$, ..., and $H_n$ for the fine adjustment, and hence highly accurate processing becomes possible.

The second output model M21 is not particularly required to calculate the second intermediate training processing information pieces $H_1$, ..., and $H_n$. The second output model M21 may output the final second training processing information without calculating the second intermediate training processing information pieces $H_1$, ..., and $H_n$. Further, the configuration of the second model M2 is not limited to the example of FIG. 3. For example, the second model M2 may include only one network instead of being divided into a plurality of networks such as the second calculation model M20 and the second output model M21.

For example, when the second model M2 includes only one network, the one network may calculate the second training target feature and the second training reference feature based on the training target image It and the training reference image $I_r$, and may output the second training processing information $H_n...H_2H_1H_g$ based on the first training processing information $H_g$, the second training target feature, and the second training reference feature. The series of those information processing steps may be defined in a program of the network, and the parameters of the network may be referred to by the program.

[Data Storage Unit]

The data storage unit 102 stores data required for training the first model M1 and the second model M2. For example, the data storage unit 102 stores a training database DB in which a plurality of pieces of training data to be learned by the learning model M are stored. The training data includes an input portion to be input to the first model M1 and the second model M2 at the time of training and a ground truth portion (output portion) serving as a ground truth at the time of training. The ground truth portion is not limited to the final output of the second model M2, and may be output indicating an intermediate result calculated by the second model M2 to obtain the final output. The ground truth portion may be a result obtained from the final output of the second model M2.

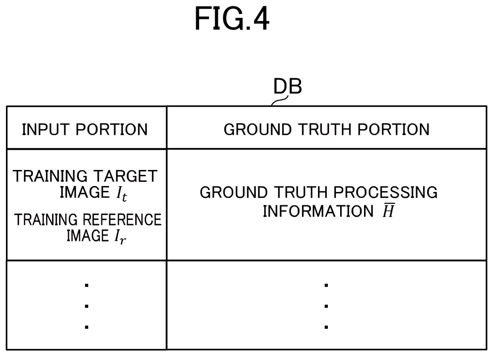

FIG. 4 is a table for showing an example of the training database DB. For example, the input portion of the training data is the training target image It and the training reference image $I_r$. For example, the training target object shown by a certain training target image It may be the same as or different from the training target object shown by another training target image It. The training target pose of the training target object shown by a certain training target image It may be the same as or different from the training target pose of the training target object shown by another training target image It. The training reference object shown by a certain training reference image $I_r$ may be the same as or different from the training reference object shown by another training reference image $I_r$. The training reference pose of the training reference object shown by a certain training reference image $I_r$ may be the same as or different from the training reference pose of the training reference object shown by another training reference image $I_r$.

The ground truth portion of the training data may include, as ground truth information, the training target image It itself after processing, the processing information used for the processing of the training target image It, or other information. In the first embodiment, a case in which the ground truth portion of the training data is ground truth processing information, which is the processing information serving as a ground truth, is taken as an example. The ground truth portion of the training data may include other information other than the ground truth processing information. In the example of FIG. 4, as the ground truth processing information, the ground truth portion of the training data includes ground truth processing information. In the example of FIG. 4, a bar is attached to the reference symbol of the ground truth processing information, but in the following description, the bar in the reference symbol is expressed in parentheses, such as H(bar).

The data stored in the data storage unit 102 is not limited to the above-mentioned example. For example, the data storage unit 102 may store a program indicating processing at the time of training. In this program, a calculation expression of a loss function may be defined.

[Training Data Acquisition Module]

The training data acquisition module 103 acquires training data. The training data includes, as the input portion, the training target image It showing the training target object and the training reference image $I_r$ showing the training reference object, and includes, as the ground truth portion, the ground truth information for processing the training target image It so that the training target pose of the training target object coincides with the training reference pose of the training reference object. In the first embodiment, the training data is stored in the training database DB, and hence the training data acquisition module 103 acquires the training data from the training database DB. The training data stored in the training database DB is assumed to have been prepared by a creator (for example, a person who operates the learning terminal 10) who creates the learning model M.

When the training data is stored in another database other than the training database DB, the training data acquisition module 103 is only required to acquire the training data from the other database. When the training data is stored in another computer other than the learning terminal 10 or an information storage medium, the training data acquisition module 103 is only required to acquire the training data from the other computer or the information storage medium. The training data acquisition module 103 can acquire any number of pieces of training data. For example, the training data acquisition module 103 acquires all or a part of the training data stored in the training database DB. The training data acquisition module 103 may repeat the acquisition of the training data until a value of each loss function described later becomes sufficiently small.

[Training Module]

The training module 104 executes the training of at least one of the first model M1 or the second model M2 based on the training data. The training is adjustment of parameters. In the first embodiment, a case in which the training module 104 executes the training of both the first model M1 and the second model M2 is taken as an example, but the training module 104 may execute only the training of the first model M1 without executing the training of the second model M2. The training module 104 may execute only the training of the second model M2 without executing the training of the first model M1. The training module 104 may execute the training of the entire first model M1, or may execute the training of only a part of the first model M1. The training module 104 may execute the training of the entire second model M2, or may execute the training of only a part of the second model M2.

For example, the training module 104 inputs the training target image It and the training reference image $I_r$, which form the input portion of the training data, to the first model M1 and the second model M2. The training module 104 is not required to input the training target image It and the training reference image $I_r$ to the first model M1 and the second model M2 at a time, and may input the training target image It and the training reference image $I_r$ separately. The training module 104 executes the training of at least one of the first model M1 or the second model M2 based on processing results of the first model M1 and the second model M2. The training module 104 executes the training of at least one of the first model M1 or the second model M2 so that the output portion of the training data is output when the input portion of the training data is input.

For example, when the training target image It and the training reference image $I_r$ are input, the first model M1 calculates the first training target feature and the first training reference feature based on current parameters. The first model M1 outputs the first training processing information $H_g$ based on the current parameters, the first training target feature, and the first training reference feature. The series of those information processing steps is as described above. The training module 104 executes the series of those information processing steps by executing the program of the first model M1.

For example, when the training target image It and the training reference image $I_r$ are input, the second model M2 calculates the second training target feature and the second training reference feature based on current parameters. The second model M2 outputs the second training processing information $H_n...H_2H_1H_g$ based on the current parameters, the first training processing information $H_g$, the second training target feature, and the second training reference feature. The series of those information processing steps is also as described above. The training module 104 executes the series of those information processing steps by executing the program of the second model M2.

For example, the training module 104 calculates a loss based on the output of the second model M2, the ground truth portion of the training data, and a predetermined loss function. The training module 104 executes the training of at least one of the first model M1 or the second model M2 by adjusting the parameters of the at least one of the first model M1 or the second model M2 so that the loss becomes small. When a plurality of training data pieces are sequentially acquired by the training data acquisition module 103, the training module 104 repeats, for each of the training data pieces, processing for inputting the training target image It and the training reference image $I_r$ included in each of the training data pieces to the first model M1 and the second model M2, acquiring output from the second model M2, calculating a loss based on the loss function, and adjusting the parameters so that the loss becomes small.

The training module 104 may calculate a loss based on the output of the first model M1, the ground truth portion of the training data, and a predetermined loss function. The training module 104 may execute the training of at least one of the first model M1 or the second model M2 by adjusting the parameters of the at least one of the first model M1 or the second model M2 so that the loss becomes small. When a plurality of training data pieces are sequentially acquired by the training data acquisition module 103, the training module 104 may repeat, for each of the training data pieces, the processing for inputting the training target image It and the training reference image $I_r$ included in each of the training data pieces to the first model M1 and the second model M2, acquiring output from the first model M1, calculating a loss based on the loss function, and adjusting the parameters so that the loss becomes small.

Further, the training module 104 may execute the training of at least one of the first model M1 or the second model M2 based on a publicly-known learning algorithm adopted in the machine learning method. For example, the training module 104 may cause at least one of the first model M1 or the second model M2 to learn the training data based on an error backpropagation method, a gradient descent method, an adaptive moment (ADAM) method, a momentum method, a method using a discriminator and a generator adopted in GAN, or another method. The training module 104 may repeat the training of at least one of the first model M1 or the second model M2 until the loss becomes less than a threshold value, or may repeat the training of at least one of the first model M1 or the second model M2 until the number of times of training reaches a predetermined number of times. The training module 104 may repeatedly use the same training data for training.

In the first embodiment, the first model M1 includes the first calculation model M10 and the first output model M12. For example, the training module 104 may execute training of the first output model M12 without executing training of the first calculation model M10. The first calculation model M10 has already learned other training objects, and hence the parameters of the first calculation model M10 are fixed. The training module 104 may execute training of the first encoder E11.

In the first embodiment, the training data includes, as the ground truth information, the ground truth processing information H(bar) regarding processing serving as a ground truth. The training module 104 calculates a processing loss based on the second training processing information $H_n...H_2H_1H_g$ and the ground truth processing information H(bar), and executes the training of at least one of the first model M1 or the second model M2 based on the processing loss. For example, the training module 104 calculates a processing loss $L_{affine}^l$ based on Equation 1. The processing loss $L_{affine}^l$ is a loss representing a magnitude of a difference between the second training processing information $H_n...H_2H_1H_g$ and the ground truth processing information H(bar). The processing loss $L_{affine}^l$ becomes larger as the difference between the second training processing information $H_n...H_2H_1H_g$ and the ground truth processing information H(bar) becomes larger, and the processing loss $L_{affine}^l$ becomes smaller as the above-mentioned difference becomes smaller.

[Equation 1]

$$L_{affine}^l = \left| H_l \cdot\cdot H_2 H_1 H_g - \bar{H} \right|$$

For example, the training data may include, as the ground truth information, ground truth image information regarding the training target image It after processing serving as a ground truth. The ground truth image information may be the ground truth processing information H(bar), or may be an image obtained after the training target image It is processed with the ground truth processing information H(bar) (training target image It after processing).

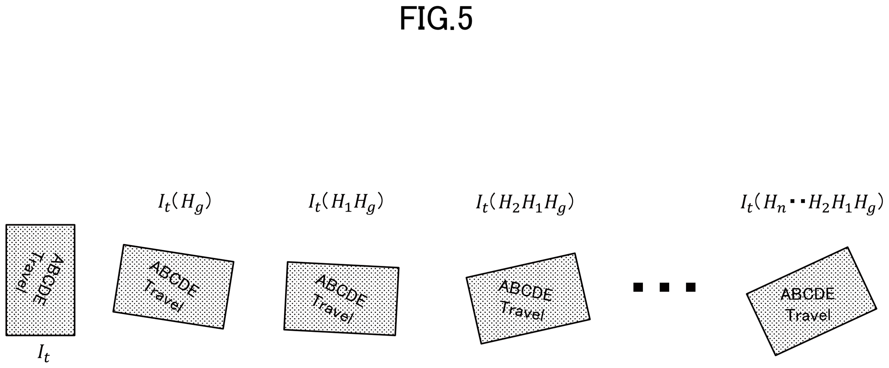

FIG. 5 is a diagram for illustrating an example of how the training target image It after processing is acquired. As illustrated in FIG. 5, in the training target image $I_t(H_g)$ after processing, which has been processed based on the first training processing information $H_g$, the first training target pose is closer to the first training reference pose than in the training target image It before processing. In the training target image It $(H_1H_g)$ after processing, which has been processed based on the second intermediate training processing information piece $H_1H_g$, the first training target pose is closer to the first training reference pose than in the training target image $I_t(H_g)$. This is due to the fine adjustment with the portion $H_1$ of the second intermediate training processing information piece $H_1H_g$. In the same manner in the following, in the training target images It $(H_2H_1H_g)$, ..., and It $(H_n...H_2H_1H_g)$ after processing corresponding to the second intermediate training processing information pieces $H_2H_1H_g$, ..., and $H_n...H_2H_1H_g$, respectively, the first training target pose gradually approaches the first training reference pose through the fine adjustment.

For example, the training module 104 processes the training target image It based on the second training processing information $H_1...H_2H_1H_g$. The training module 104 calculates an image loss based on the processed training target image It and the ground truth image information, and executes the training of at least one of the first model M1 or the second model M2 based on the image loss. For example, the training module 104 calculates an image loss $L_{image}^l$ based on Equation 2. The $I_t^l$ in Equation 2 is a function indicating processing of the training target image It. The image loss $L_{image}^l$ is a loss representing a magnitude of a difference between the training target image It $(H_n...H_2H_1H_g)$ after processing and a training target image It (H (bar)) after processing serving as a ground truth, which corresponds to the ground truth image information. The image loss $L_{image}^l$ becomes larger as the difference between the training target image $I_t(H_n...H_2H_1H_g)$

after processing and the training target image It(H(bar)) after processing serving as a ground truth, which corresponds to the ground truth image information, becomes larger, and the image loss $L_{image}^l$ becomes smaller as the above-mentioned difference becomes smaller. The magnitude of the above-mentioned difference may be calculated based on a difference in a pixel value of each pixel.

[Equation 2]

$$L_{image}^l = \left| I_t^l(H_l \cdot \cdot H_2 H_1 H_g) - I_t^l(\overline{H}) \right|$$

For example, the training data may include, as the ground truth information, ground truth correspondence information regarding a correspondence between each pixel of the training target image It and each pixel of the training target image It after processing serving as a ground truth. The ground truth image information may be the ground truth processing information H(bar), or may be information indicating a correspondence relationship between the training target image It before processing and the image obtained after the training target image It is processed with the ground truth processing information H(bar) (training target image It after processing). The correspondence relationship as used herein refers to information indicating which location a pixel before processing has been moved to after processing. For example, the movement amount of each pixel in the horizontal direction (X-axis direction) and the movement amount of the pixel in the vertical direction (Y-axis direction) correspond to the correspondence relationship. The rotation amount of each pixel may correspond to the correspondence relationship, and the enlargement ratio of each pixel may correspond to the correspondence relationship.

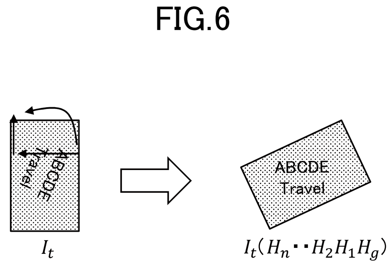

FIG. 6 is a diagram for illustrating an example of the correspondence relationship of each pixel of the training target image It between before and after processing. As illustrated in FIG. 6, the training module 104 processes the training target image It based on the second training processing information $H_n...H_2 H_1 H_g$, acquires training correspondence information regarding a correspondence between the training target image It before processing and the training target image $I_t(H_n...H_2 H_1 H_g)$ after processing, calculates a correspondence loss based on the training correspondence information and the ground truth correspondence information, and executes the training of at least one of the first model M1 or the second model M2 based on the correspondence loss.

The training correspondence information is information indicating a correspondence relationship between the training target image It before processing and the training target image $I_t(H_n...H_2 H_1 H_g)$ after processing. For example, when each pixel has been moved by processing, the training correspondence information represents the movement amount of each pixel in the horizontal direction (X-axis direction) and the movement amount of the pixel in the vertical direction (Y-axis direction). When each pixel has been rotated by processing, the training correspondence information represents the rotation amount of each pixel. When each pixel has been enlarged or reduced by processing, the training correspondence information represents the enlargement ratio of each pixel.

For example, the training module 104 calculates training correspondence information $C_t^l(H_l...H_2 H_1 H_g)$ based on the second training processing information $H_l...H_2 H_1 H_g$. A function $C_t^l$ for calculating the training correspondence information $C_t^l(H_l...H_2 H_1 H_g)$ may be a publicly-known function. The training correspondence information $C_t^l(H_l...H_2 H_1 H_g)$ is sometimes called a correspondence map. The training module 104 calculates a correspondence loss $L_{corres}^l$ based on Equation 3. The correspondence loss $L_{corres}^l$ is a loss representing a magnitude of a difference between the training correspondence information $C_t^l(H_l...H_2 H_1 H_g)$ and ground truth correspondence information $C_t^l(H(bar))$. The correspondence loss $L_{corres}^l$ becomes larger as the difference between the training correspondence information $C_t^l(H_l...H_2 H_1 H_g)$ and the ground truth correspondence information $C_t^l(H(bar))$ becomes larger, and the correspondence loss $L_{corres}^l$ becomes smaller as the above-mentioned difference becomes smaller.

[Equation 3]

$$L_{corres}^l = \left| C_t^l(H_l \cdot \cdot H_2 H_1 H_g) - C_t^l(\overline{H}) \right|$$

For example, the training module 104 calculates a total loss $L_{total}$ based on Equation 4. The numerical value of "l" can assume any value of from 1 to "n", and hence in the example of Equation 4, while changing the numerical value of "l" from 1 to "n", the training module 104 sequentially calculates the processing loss $L_{affine}^l$, the image loss $L_{image}^l$, and the correspondence loss $L_{corres}^l$, and calculates a sum $W^l(L_{affine}^l + L_{image}^l + L_{corres}^l)$ thereof. The training module 104 calculates the total loss $L_{total}$ by summing up the sums $W^l(L_{affine}^l + L_{image}^l + L_{corres}^l)$ calculated by changing the numerical value of "l" from 1 to "n". The training module 104 trains at least one of the first model M1 or the second model M2 so that the total loss $L_{total}$ becomes small.

[Equation 4]

$$L_{total} = \sum_{l=1}^{n} W^l (L_{affine}^l + L_{image}^l + L_{corres}^l)$$

The learning method to be used by the training module 104 is not limited to the above-mentioned example. For example, the training module 104 may execute the training of at least one of the first model M1 or the second model M2 based on any one or two of the processing loss $L_{affine}^l$, the image loss $L_{image}^l$, or the correspondence loss $L_{corres}^l$ without calculating the total loss $L_{total}$. The training module 104 may also execute the training of at least one of the first model M1 or the second model M2 by calculating only a part (for example, only any one) of the sums $W^1(L_{affine}^1 + L_{image}^1 + L_{corres}^1)$ to $W^n$ ($L_{affine}^n + L_{image}^n + L_{corres}^n$) without changing the numerical value of "l" from 1 to **"n".**

[1-4. Process to be executed by Learning System According to First Embodiment]

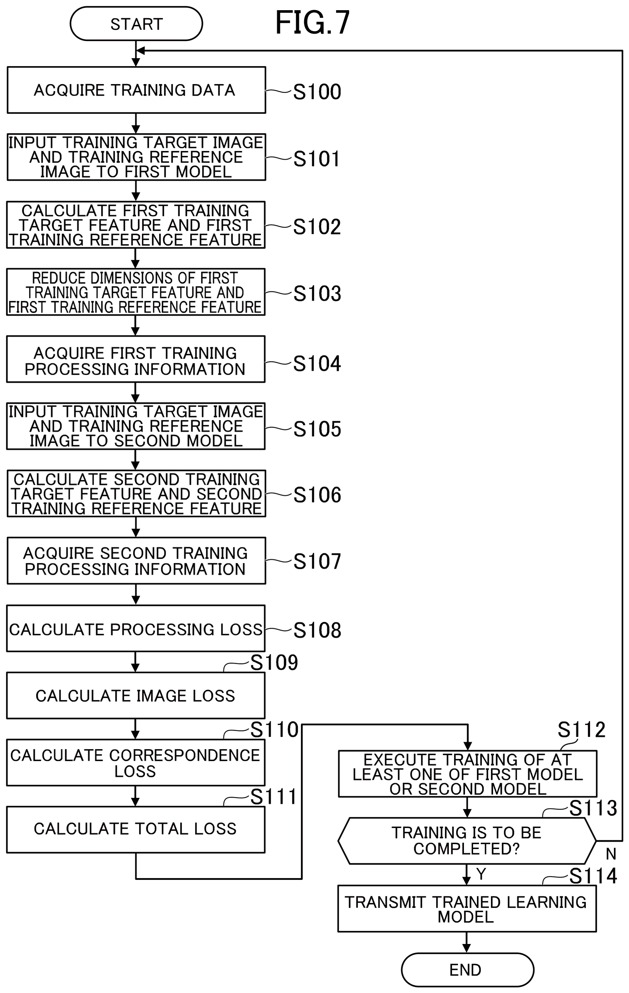

FIG. 7 is a flow chart for illustrating an example of a process to be executed by the learning system 1 according to the first embodiment. The process of FIG. 7 is executed when the control unit 11 executes the program stored in the storage unit 12. The respective steps of FIG. 7 are an example of the learning method according to the present disclosure.
As illustrated in FIG. 7, the learning terminal 10 acquires the training data from the training database DB (Step S100). The learning terminal 10 inputs the training target image It and the training reference image $I_r$ to the first model M1 (Step S101). The learning terminal 10 calculates the first training target feature and the first training reference feature based on the first calculation model M10 (Step S102). The learning terminal 10 reduces the dimensions of the first training target feature and the first training reference feature based on the first encoder E11 (Step S103). The learning terminal 10 acquires the first training processing information $H_g$ output from the first output model M12, based on the first output model M12 and the first training target feature and the first training reference feature that have dimensions reduced (Step S104).
The learning terminal 10 inputs the training target image It and the training reference image $I_r$ to the second model M2 (Step S105). The learning terminal 10 calculates the second training target feature and the second training reference feature based on the second calculation model M20 (Step S106). The learning terminal 10 inputs the first training processing information $H_g$, the second training target feature, and the second training reference feature to the second output model M21, and acquires the second training processing information $H_n...H_2H_1H_g$ output from the second output model (Step S107).
The learning terminal 10 calculates the processing loss $L_{affine}^l$ based on the second training processing information $H_n...H_2H_1H_g$ and the ground truth portion of the training data (Step S108). The learning terminal 10 calculates the image loss $L_{image}^l$ based on the second training processing information $H_n...H_2H_1H_g$ and the ground truth portion of the training data (Step S109). The learning terminal 10 calculates the correspondence loss $L_{corres}^l$ based on the second training processing information $H_n...H_2H_1H_g$ and the ground truth portion of the training data (Step S110). The learning terminal 10 calculates the total loss $L_{total}$ based on the processing loss $L_{affine}^l$, the image loss $L_{image}^l$, and the correspondence loss $L_{corres}^l$ (Step S111).
The learning terminal 10 executes the training of at least one of the first model M1 or the second model M2 based on the total loss $L_{total}$ (Step S112). The learning terminal 10 determines whether or not to complete the training (Step S113). In Step S113, the learning terminal 10 may determine whether or not each loss has become less than a threshold value, or may determine whether or not a predetermined number of training data pieces have been learned by at least one of the first model M1 or the second model M2. When it is not determined that the training is to be completed (N in Step S113), the process returns to Step S100 to acquire the next training data. When it is determined that the training is to be completed (Y in Step S113), the learning terminal 10 transmits the trained first model M1 and second model M2 to the server 20 (Step S114), and this process ends. The server 20 records the trained first model M1 and second model M2.

[1-5. Summary of First Embodiment]

The learning system 1 according to the first embodiment acquires training data. The learning system 1 stores the first model M1. The learning system 1 stores the second model M2. The learning system 1 executes the training of at least one of the first model M1 or the second model M2 based on the training data. Thus, the learning system 1 executes the training of at least one of the first model M1 or the second model M2 so that the training target image $I_t$ can be processed with high accuracy so that the training target pose coincides with the training reference pose, and hence the accuracy of processing can be improved. For example, even when a sufficient number of feature points cannot be extracted from the training target image It, the learning system 1 can create at least one of the first model M1 or the second model M2 that can execute highly accurate processing. The learning system 1 can create at least one of the first model M1 or the second model M2 that is not required to execute complicated processing such as extraction of a large number of feature points, and hence a processing load on the computer used at the time of estimation can be reduced. The learning system 1 can improve the accuracy of estimation of the pose of the training target object that is an object of the same type as that of the training reference object. The learning system 1 can also perform processing such as the affine transformation in various aspects such as enlargement, rotation, and translation, in addition to mere pixel changes.

Further, the first model M1 includes the first calculation model M10 and the first output model M12. The learning system 1 can improve the accuracy of the first model M1 by separating the first calculation model M10, which specializes in feature calculation, and the first output model M12, which specializes in output for processing.

Further, the first calculation model M10 is a trained model in which other training objects different from the training target object and the training reference object have been learned. The learning system 1 executes the training of the first output model M12 without executing the training of the first calculation model M10. This enables the learning system 1 to make the training of the first model M1 more efficient through use of the trained first calculation model M10. For example, when features such as general characters have been learned by the first calculation model M10, the learning system 1 can handle an unknown logo or the like that has not been learned by the second model M2. The learning system 1 can save time and effort of re-training at least one of the first model M1 or the second model M2 in order to handle a logo different from the logo at the time of training.

Further, the first model M1 further includes the first encoder E11. The first output model M12 outputs the first training processing information $H_g$ based on the first training target feature and the first training reference feature that have dimensions reduced by the first encoder E11. This enables the first output model M12 to output the first training processing information $H_g$ based on the first training target feature and the first training reference feature that further facilitate recognition of features, and hence the learning system 1 can further improve the accuracy of processing.

Further, the second model M2 processes the second training target feature based on the first training processing information $H_g$, and outputs the second training processing information $H_n...H_2H_1H_g$ based on the processed second training target feature and the second training reference feature. This enables the learning system 1 to use the second model M2 to perform processing that is insufficient with the first model M1, and hence the accuracy of processing can be further improved.

Further, the second model M2 includes the second calculation model M20 and the second output model M21. This enables the learning system 1 to improve the accuracy of the second model M2 by separating the second calculation model M20, which specializes in feature calculation, and the second output model M21, which specializes in output for processing.

Further, the second calculation model M20 includes a plurality of layers that calculate the second training target feature and the second training reference feature. The second output model M21 sequentially calculates the second intermediate training processing information pieces $H_n$, $H_2$, and $H_1$, which represent intermediate stages of the second training processing information, across the plurality of layers based on the first training processing information $H_g$ and the second training target feature and the second training reference feature calculated by each of the plurality of layers, and outputs the second final training processing information $H_n...H_2H_1H_g$, which represents a final stage of the second training processing information. This enables the learning system 1 to sequentially calculate information for performing processing that is insufficient with the first model M1 through use of the second model M2, and hence the accuracy of processing can be further improved.

Further, the training data includes, as the ground truth information, the ground truth processing information H(bar) regarding processing serving as a ground truth. The learning system 1 calculates the processing loss $L_{affine}^l$ based on the second training processing information $H_n...H_2H_1H_g$ and the ground truth processing information H(bar), and executes the training of at least one of the first model M1 or the second model M2 based on the processing loss $L_{affine}^l$. This enables the learning system 1 to create at least one of the first model M1 or the second model M2 so that the processing loss $L_{affine}^l$ becomes small, and hence the accuracy of processing can be improved.

Further, the training data includes, as the ground truth information, the ground truth image information regarding the training target image $I_t$ after processing serving as a ground truth. The learning system 1 processes the training target image It based on the second training processing information $H_n...H_2H_1H_g$, and calculates an image loss $L_{image}^l$ based on the processed training target image It and the ground truth image information, and executes the training of at least one of the first model M1 or the second model M2 based on the image loss $L_{image}^l$. This enables the learning system 1 to create at least one of the first model M1 or the second model M2 so that the image loss $L_{image}^l$ becomes small, and hence the accuracy of processing can be improved.

Further, the training data includes, as the ground truth information, the ground truth correspondence information regarding the correspondence between each pixel of the training target image It and each pixel of the training target image It after processing serving as a ground truth. The learning system 1 processes the training target image It based on the second training processing information $H_n...H_2H_1H_g$, acquires training correspondence information regarding the correspondence between the training target image $I_t$ before processing and the training target image It after processing, calculates a correspondence loss $L_{corres}^{l}$ based on the training correspondence information and the ground truth correspondence information, and executes the training of at least one of the first model M1 or the second model M2 based on the correspondence loss $L_{corres}^{l}$. This enables the learning system 1 to create at least one of the first model M1 or the second model M2 so that the correspondence loss $L_{corres}^{l}$ becomes small, and hence the accuracy of processing can be improved.

[2. Second Embodiment]

The second embodiment, which is an example of an embodiment of the estimation system 2, estimation method, and program according to the present disclosure, is described. In the first embodiment, the configuration at the time of training of the first model M1 and the second model M2 has been described, but in the second embodiment, a configuration at the time of estimation by the trained first model M1 and second model M2 is described. In the second embodiment, description of the same points as in the first embodiment is omitted. The estimation system 2 may include only functions for estimation described below without including the functions for learning described in the first embodiment. A mode in which the estimation system 2 includes only the functions for estimation without including the functions for learning is also within the scope of the present disclosure.

In the second embodiment, a case in which the hardware configuration of the estimation system 2 is the same as that of the learning system 1 is taken as an example. For example, the estimation system 2 includes the learning terminal 10, the server 20, and the user terminal 30. The hardware configuration of the estimation system 2 is not limited to the example of FIG. 1. The estimation system 2 is only required to include at least one computer. For example, the estimation system 2 may include only the server 20. In this case, the learning terminal 10 and the user terminal 30 are present outside the estimation system 2. The estimation system 2 may include a computer not shown in FIG. 1. For example, estimation using the trained first model M1 and second model M2 may be executed by a computer other than the server 20.

In the second embodiment, the target image, the target object, the target pose, the reference image, the reference object, and the reference pose at the time of estimation are referred to as "estimation target image," "estimation target object," "estimation target pose," "estimation reference image," "estimation reference object," and "estimation reference pose," respectively. The estimation system 2 processes the estimation target image so that the estimation target pose of the estimation target object in the estimation target image coincides with the estimation reference pose of the estimation reference object in the estimation reference image. Details of the estimation system 2 are described below.

[2-1. Functions implemented by Estimation System According to Second Embodiment]

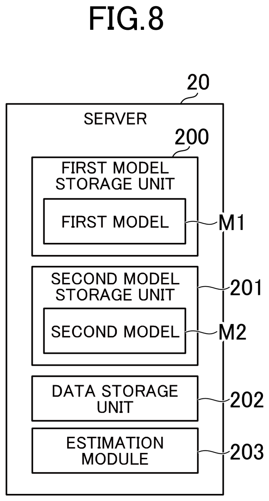

FIG. 8 is a diagram for illustrating an example of functions implemented by the estimation system 2 according to the second embodiment. In the second embodiment, description is given of functions implemented by the server 20 among the functions implemented by the estimation system 2. For example, the server 20 includes a first model storage unit 200, a second model storage unit 201, a data storage unit 202, and an estimation module 203. The first model storage unit 200, the second model storage unit 201, and the data storage unit 202 are implemented by the storage unit 22. The estimation module 203 is implemented by the control unit 21.

[First Model Storage Unit]

The first model storage unit 200 stores the trained first model M1. For example, the server 20 acquires the trained first model M1 from the learning terminal 10, and records the acquired first model M1 in the first model storage unit 200.

[Second Model Storage Unit]

The second model storage unit 201 stores the trained second model M2. For example, the server 20 acquires the trained second model M2 from the learning terminal 10, and records the acquired second model M2 in the second model storage unit 201.

[Data Storage Unit]

The data storage unit 202 stores the estimation target image and the estimation reference image. For example, the server 20 acquires the estimation target image from the user terminal 30, and records the acquired estimation target image in the data storage unit 202. It is assumed that the estimation reference image is recorded in the data storage unit 202 in advance.

[Estimation Module]

The estimation module 203 processes, after training by the training module 104 described in the first embodiment is completed, the estimation target image showing the estimation target object so that the estimation target pose of the estimation target object coincides with the estimation reference pose of the estimation reference object, based on the estimation target image, the estimation reference image showing the estimation reference object, the first model M1 described in the first embodiment, and the second model M2 described in the first embodiment.

For example, the first model M1 calculates a first estimation target feature of the estimation target image and a first estimation reference feature of the estimation reference image, and outputs first estimation processing information based on the first estimation target feature and the first estimation reference feature. A calculation method for the first estimation target feature and the first estimation reference feature may be obtained by replacing the word "training" by "estimation" in the description of the calculation method for the first training target feature and the first training reference feature described in the first embodiment. A method of outputting the first estimation processing information based on the first estimation target feature and the first estimation reference feature may also be obtained by replacing the word "training" by "estimation" in the description of the method of outputting the first training processing information $H_g$ described in the first embodiment.

For example, the second model M2 calculates a second estimation target feature of the estimation target image and a second estimation reference feature of the estimation reference image, and outputs second estimation processing information based on the second estimation target feature and the second estimation reference feature. A calculation method for the second estimation target feature and the second estimation reference feature may be obtained by replacing the word "training" by "estimation" in the description of the calculation method for the second training target feature and the second training reference feature described in the first embodiment. A method of outputting the second estimation processing information based on the second estimation target feature and the second estimation reference feature may also be obtained by replacing the word "training" by "estimation" in the description of the method of outputting the second training processing information $H_n...H_2H_1H_g$ described in the first embodiment.

[2-2. Process to be executed by Estimation System According to Second Embodiment]

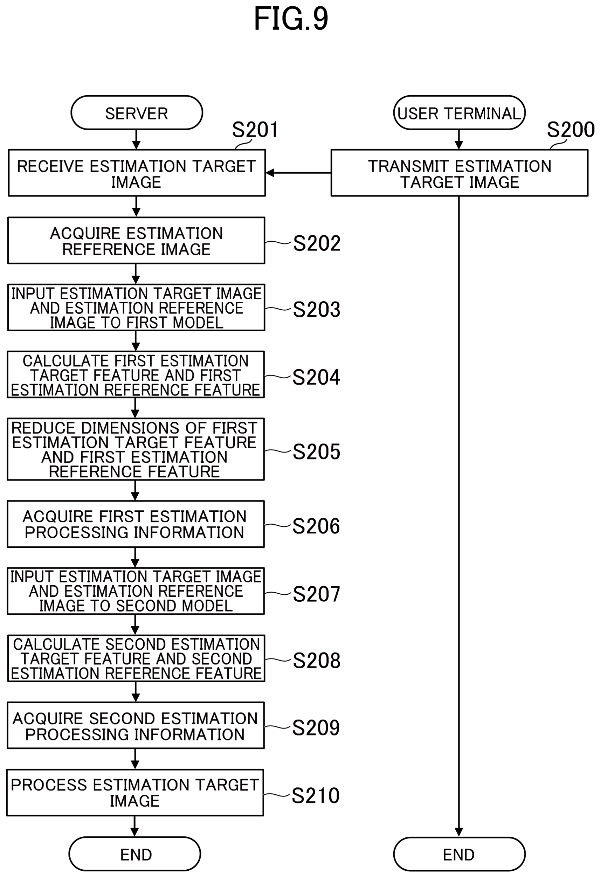

FIG. 9 is a flow chart for illustrating an example of a process to be executed by the estimation system 2 according to the second embodiment. The process of FIG. 9 is executed when the control units 21 and 31 execute the programs stored in the storage units 22 and 32. The respective steps of FIG. 9 are an example of the estimation method according to the present disclosure.

As illustrated in FIG. 9, the user terminal 30 generates an estimation target image based on a photographing result from the photographing unit 36, and transmits the estimation target image to the server 20 (Step S200). The server 20 receives the estimation target image from the user terminal 30 (Step S201). The server 20 acquires the estimation reference image stored in the storage unit 22 (Step S202). It is assumed that the estimation reference object is shown in the estimation reference image in an appropriate pose.

The server 20 inputs the estimation target image and the estimation reference image to the trained first model M1 (Step S203). The server 20 calculates the first estimation target feature and the first estimation reference feature based on the first calculation model M10 (Step S204). The server 20 reduces the dimensions of the first estimation target feature and the first estimation reference feature based on the first encoder E11 (Step S205). The server 20 acquires the first estimation processing information output from the first output model M12, based on the first output model M12 and the first estimation target feature and the first estimation reference feature that have dimensions reduced (Step S206).

The server 20 inputs the estimation target image and the estimation reference image to the second model M2 (Step S207). The server 20 calculates the second estimation target feature and the second estimation reference feature based on the second calculation model M20 (Step S208). The server 20 inputs the first estimation processing information, the second estimation target feature, and the second estimation reference feature to the second output model M21, and acquires the second estimation processing information output from the second output model M21 (Step S209). The server 20 processes the estimation target image based on the second estimation processing information (Step S210), and this process ends. The processing of the estimation target image in Step S210 may be executed inside at least one of the first model M1 or the second model M2, or a separate program for processing may be present. When the estimation system 2 is used for eKYC, after the process step of Step S210 is executed, eKYC processing is executed based on the estimation target image after processing.

[2-3. Summary of Second Embodiment]

The estimation system 2 according to the second embodiment processes, after training by the training module 104 described in the first embodiment is completed, the estimation target image so that the estimation target pose coincides with the estimation reference pose, based on the estimation target image, the estimation reference image, the first model M1 described in the first embodiment, and the second model M2 described in the first embodiment. This enables the learning system 1 to improve the accuracy of processing of the target image. For example, even when a sufficient number of feature points cannot be extracted from the estimation target image, the estimation system 2 can execute highly accurate processing. The estimation system 2 is not required to execute complicated processing such as extraction of a large number of feature points, and hence a processing load on the server 20 can be reduced. The estimation system 2 can improve the accuracy of estimation of the pose of the estimation target object that is an object of the same type as that of the estimation reference object. The estimation system 2 can also perform processing such as the affine transformation in various aspects such as enlargement, rotation, and translation, in addition to mere pixel changes.

[3. Modification Examples]

The present disclosure is not limited to the first embodiment and the second embodiment described above. The present disclosure can be modified suitably without departing from the spirit of the present disclosure.

For example, the first model M1 and the second model M2 may be used for a purpose other than eKYC or possession-based authentication. The first model M1 and the second model M2 may be used for the purpose of processing a landscape photograph taken by a user, for the purpose of processing a document image scanned by a user with a scanner, for the purpose of processing a CG image created by a user, or for another purpose. The service in which the first model M1 and the second model M2 are used may also be any service. For example, the first model M1 and the second model M2 may be used in an e-commerce service, a communication service, a travel reservation service, a financial service, a payment service, or another service.

For example, the training target object, the training reference object, the estimation target object, and the estimation reference object may be objects other than a logo. For example, the other objects may be a character string representing a credit card company of a credit card, a character formed on an identity verification document such as a driver's license, a character formed on another medium other than an identity verification document, a subject such as a road sign or a building, or various graphic forms. The first model M1 and the second model M2 can be applied to any scene in which a pose of some object is required be corrected.

For example, the functions described as those implemented in the learning terminal 10 may be implemented in another computer such as the server 20. The functions described as those implemented in the learning terminal 10 may be implemented in a distributed manner by the learning terminal 10 and another computer. The functions described as those implemented in the server 20 may be implemented in another computer such as the user terminal 30. The functions described as those implemented in the server 20 may be implemented in a distributed manner by the server 20 and another computer.

[4. Supplementary Notes]

For example, the learning system and the estimation system can also be configured as follows.

(1) A learning system, including:

a training data acquisition module configured to acquire training data including, as an input portion, a training target image showing a training target object and a training reference image showing a training reference object, and including, as a ground truth portion, ground truth information for processing the training target image so that a training target pose of the training target object coincides with a training reference pose of the training reference object;
a first model storage unit configured to store a first model configured to calculate a first training target feature of the training target image and a first training reference feature of the training reference image, and to output first training processing information for processing the training target image so that the training target pose coincides with the training reference pose, based on the first training target feature and the first training reference feature;
a second model storage unit configured to store a second model configured to calculate a second training target feature of the training target image and a second training reference feature of the training reference image, and to output second training processing information for processing the training target image so that the training target pose coincides with the training reference pose, based on the first training processing information, the second training target feature, and the second training reference feature; and
a training module configured to execute training of at least one of the first model or the second model based on the training data.

(2) The learning system according to Item (1), wherein the first model includes:

a first calculation model configured to calculate the first training target feature based on the training target image, and to calculate the first training reference feature based on the training reference image; and
a first output model configured to output the first training processing information based on the first training target feature and the first training reference feature.

(3) The learning system according to Item (2),

wherein the first calculation model is a trained model in which another training object different from the training target object and the training reference object has been learned, and
wherein the training module is configured to execute training of the first output model without executing training of the first calculation model.

(4) The learning system according to Item (2) or (3),

wherein the first model further includes a first encoder configured to reduce dimensions of the first training target feature and the first training reference feature calculated by the first calculation model, and
wherein the first output model is configured to output the first training processing information based on the first training target feature and the first training reference feature that have dimensions reduced by the first encoder.

(5) The learning system according to any one of Items (1) to (4), wherein the second model is configured to process the second training target feature based on the first training processing information, and to output the second training processing information based on the processed second training target feature and the second training reference feature.

(6) The learning system according to any one of Items (1) to (5), wherein the second model includes:

a second calculation model configured to calculate the second training target feature based on the training target image, and to calculate the second training reference feature based on the training reference image; and
a second output model configured to output the second training processing information based on the first training processing information, the second training target feature, and the second training reference feature.

(7) The learning system according to Item (6),

wherein the second calculation model includes a plurality of layers that calculate the second training target feature and the second training reference feature, and
wherein the second output model is configured to sequentially calculate second intermediate training processing information pieces, which represent intermediate stages of the second training processing information, across the plurality of layers based on the first training processing information and the second training target feature and the second training reference feature calculated by each of the plurality of layers, and to output second final training processing information, which represents a final stage of the second training processing information.

(8) The learning system according to any one of Items (1) to (7),

wherein the training data includes, as the ground truth information, ground truth processing information regarding processing serving as a ground truth, and
in which the training module is configured to calculate a processing loss based on the second training processing information and the ground truth processing information, and to execute the training of at least one of the first model or the second model based on the processing loss.

(9) The learning system according to any one of Items (1) to (8),

wherein the training data includes, as the ground truth information, ground truth image information regarding the training target image after processing serving as a ground truth, and
wherein the training module is configured to process the training target image based on the second training processing information, to calculate an image loss based on the processed training target image and the ground truth image information, and to execute the training of at least one of the first model or the second model based on the image loss.

(10) The learning system according to any one of Items (1) to (9),

wherein the training data includes, as the ground truth information, ground truth correspondence information regarding a correspondence between each pixel of the training target image and each pixel of the training target image after processing serving as a ground truth, and

wherein the training module is configured to process the training target image based on the second training processing information, to acquire training correspondence information regarding a correspondence between the training target image before processing and the training target image after processing, to calculate a correspondence loss based on the training correspondence information and the ground truth correspondence information, and to execute the training of at least one of the first model or the second model based on the correspondence loss.

(11) An estimation system, including an estimation module configured to process, after training by the training module of any one of Items (1) to (10) is completed, an estimation target image showing an estimation target object so that an estimation target pose of the estimation target object coincides with an estimation reference pose of an estimation reference object, based on the estimation target image, an estimation reference image showing the estimation reference object, the first model of any one of Items (1) to (10), and the second model of any one of Items (1) to (10).

**Claims**

1.  A learning system (1), comprising:

    a training data acquisition module (103) configured to acquire training data including, as an input portion, a training target image showing a training target object and a training reference image showing a training reference object, and including, as a ground truth portion, ground truth information for processing the training target image so that a training target pose of the training target object coincides with a training reference pose of the training reference object;
    a first model storage unit (100) configured to store a first model configured to calculate a first training target feature of the training target image and a first training reference feature of the training reference image, and to output first training processing information for processing the training target image so that the training target pose coincides with the training reference pose, based on the first training target feature and the first training reference feature;
    a second model storage unit (101) configured to store a second model configured to calculate a second training target feature of the training target image and a second training reference feature of the training reference image, and to output second training processing information for processing the training target image so that the training target pose coincides with the training reference pose, based on the first training processing information, the second training target feature, and the second training reference feature; and
    a training module (104) configured to execute training of at least one of the first model or the second model based on the training data.

2.  The learning system (1) according to claim 1, wherein the first model includes:

    a first calculation model configured to calculate the first training target feature based on the training target image, and to calculate the first training reference feature based on the training reference image; and
    a first output model configured to output the first training processing information based on the first training target feature and the first training reference feature.

3.  The learning system (1) according to claim 2,

    wherein the first calculation model comprises a trained model in which another training object different from the training target object and the training reference object has been learned, and
    wherein the training module (104) is configured to execute training of the first output model without executing training of the first calculation model.

4.  The learning system (1) according to claim 2 or 3,

    wherein the first model further includes a first encoder configured to reduce dimensions of the first training target feature and the first training reference feature calculated by the first calculation model, and
    wherein the first output model is configured to output the first training processing information based on the first training target feature and the first training reference feature that have dimensions reduced by the first encoder.

5. The learning system (1) according to any one of claims 1 to 4, wherein the second model is configured to process the second training target feature based on the first training processing information, and to output the second training processing information based on the processed second training target feature and the second training reference feature.

6. The learning system (1) according to any one of claims 1 to 5, wherein the second model includes:

a second calculation model configured to calculate the second training target feature based on the training target image, and to calculate the second training reference feature based on the training reference image; and

a second output model configured to output the second training processing information based on the first training processing information, the second training target feature, and the second training reference feature.

7. The learning system (1) according to claim 6,

wherein the second calculation model includes a plurality of layers that calculate the second training target feature and the second training reference feature, and

wherein the second output model is configured to sequentially calculate second intermediate training processing information pieces, which represent intermediate stages of the second training processing information, across the plurality of layers based on the first training processing information and the second training target feature and the second training reference feature calculated by each of the plurality of layers, and to output second final training processing information, which represents a final stage of the second training processing information.

8. The learning system (1) according to any one of claims 1 to 7,

wherein the training data includes, as the ground truth information, ground truth processing information regarding processing serving as a ground truth, and

wherein the training module (104) is configured to calculate a processing loss based on the second training processing information and the ground truth processing information, and to execute the training of at least one of the first model or the second model based on the processing loss.

9. The learning system (1) according to any one of claims 1 to 8,

wherein the training data includes, as the ground truth information, ground truth image information regarding the training target image after processing serving as a ground truth, and

wherein the training module (104) is configured to process the training target image based on the second training processing information, to calculate an image loss based on the processed training target image and the ground truth image information, and to execute the training of at least one of the first model or the second model based on the image loss.

10. The learning system (1) according to any one of claims 1 to 9,

wherein the training data includes, as the ground truth information, ground truth correspondence information regarding a correspondence between each pixel of the training target image and each pixel of the training target image after processing serving as a ground truth, and

wherein the training module (104) is configured to process the training target image based on the second training processing information, to acquire training correspondence information regarding a correspondence between the training target image before processing and the training target image after processing, to calculate a correspondence loss based on the training correspondence information and the ground truth correspondence information, and to execute the training of at least one of the first model or the second model based on the correspondence loss.

11. A learning method, comprising:

a training data acquisition step of acquiring training data including, as an input portion, a training target image showing a training target object and a training reference image showing a training reference object, and including, as a ground truth portion, ground truth information for processing the training target image so that a training target pose of the training target object coincides with a training reference pose of the training reference object; and

a training step of executing, based on the training data, training of at least one of: a first model configured to calculate a first training target feature of the training target image and a first training reference feature of the training reference image, and to output first training processing information for processing the training target image so that the training target pose coincides with the training reference pose, based on the first training target feature and the first training reference feature; or a second model configured to calculate a second training target feature of the training target image and a second training reference feature of the training reference image, and to output second training processing information for processing the training target image so that the training target pose coincides with the training reference pose, based on the first training processing information, the second training target feature, and the second training reference feature.

12. A program for causing a computer to function as:

a training data acquisition module (103) configured to acquire training data including, as an input portion, a training target image showing a training target object and a training reference image showing a training reference object, and including, as a ground truth portion, ground truth information for processing the training target image so that a training target pose of the training target object coincides with a training reference pose of the training reference object; and
a training module (104) configured to execute, based on the training data, training of at least one of: a first model configured to calculate a first training target feature of the training target image and a first training reference feature of the training reference image, and to output first training processing information for processing the training target image so that the training target pose coincides with the training reference pose, based on the first training target feature and the first training reference feature; or a second model configured to calculate a second training target feature of the training target image and a second training reference feature of the training reference image, and to output second training processing information for processing the training target image so that the training target pose coincides with the training reference pose, based on the first training processing information, the second training target feature, and the second training reference feature.

# FIG.1

1(2)

**20**

SERVER

| CONTROL UNIT | 21 |
| STORAGE UNIT | 22 |
| COMMUNICATION UNIT | 23 |

CN

COMMUNICATION NETWORK

**30**

USER TERMINAL

| CONTROL UNIT | 31 |
| STORAGE UNIT | 32 |
| COMMUNICATION UNIT | 33 |
| OPERATION UNIT | 34 |
| DISPLAY UNIT | 35 |
| PHOTOGRAPHING UNIT | 36 |

**10**

LEARNING TERMINAL

| CONTROL UNIT | 11 |
| STORAGE UNIT | 12 |
| COMMUNICATION UNIT | 13 |
| OPERATION UNIT | 14 |
| DISPLAY UNIT | 15 |

# FIG.2

10

LEARNING TERMINAL

100

FIRST MODEL
STORAGE UNIT

FIRST MODEL — M1

SECOND MODEL
STORAGE UNIT — 101

SECOND MODEL — M2

DATA STORAGE
UNIT — 102

TRAINING
DATABASE — DB

TRAINING DATA
ACQUISITION MODULE — 103

TRAINING MODULE — 104

# FIG.3

# FIG.4

DB

| INPUT PORTION | GROUND TRUTH PORTION |
|---|---|
| TRAINING TARGET IMAGE $I_t$<br><br>TRAINING REFERENCE IMAGE $I_r$ | GROUND TRUTH PROCESSING INFORMATION $\overline{H}$ |
| $\vdots$ | $\vdots$ |

# FIG.5

$I_t(H_g)$  $I_t(H_1 H_g)$  $I_t(H_2 H_1 H_g)$  $I_t(H_n \cdots H_2 H_1 H_g)$

$I_t$

# FIG.6

$$I_t$$

$$I_t(H_n \cdot \cdot H_2 H_1 H_g)$$

# FIG.7

START

ACQUIRE TRAINING DATA — S100

INPUT TRAINING TARGET IMAGE AND TRAINING REFERENCE IMAGE TO FIRST MODEL — S101

CALCULATE FIRST TRAINING TARGET FEATURE AND FIRST TRAINING REFERENCE FEATURE — S102

REDUCE DIMENSIONS OF FIRST TRAINING TARGET FEATURE AND FIRST TRAINING REFERENCE FEATURE — S103

ACQUIRE FIRST TRAINING PROCESSING INFORMATION — S104

INPUT TRAINING TARGET IMAGE AND TRAINING REFERENCE IMAGE TO SECOND MODEL — S105

CALCULATE SECOND TRAINING TARGET FEATURE AND SECOND TRAINING REFERENCE FEATURE — S106

ACQUIRE SECOND TRAINING PROCESSING INFORMATION — S107

CALCULATE PROCESSING LOSS — S108

CALCULATE IMAGE LOSS — S109

CALCULATE CORRESPONDENCE LOSS — S110

CALCULATE TOTAL LOSS — S111

EXECUTE TRAINING OF AT LEAST ONE OF FIRST MODEL OR SECOND MODEL — S112

TRAINING IS TO BE COMPLETED? — S113    N

Y

TRANSMIT TRAINED LEARNING MODEL — S114

END

# FIG.8

SERVER — 20

FIRST MODEL STORAGE UNIT — 200

FIRST MODEL — M1

SECOND MODEL STORAGE UNIT — 201

SECOND MODEL — M2

DATA STORAGE UNIT — 202

ESTIMATION MODULE — 203

# FIG.9

( SERVER )    S201

( USER TERMINAL )    S200

| RECEIVE ESTIMATION TARGET IMAGE | ← | TRANSMIT ESTIMATION TARGET IMAGE |

ACQUIRE ESTIMATION REFERENCE IMAGE    S202

INPUT ESTIMATION TARGET IMAGE AND ESTIMATION REFERENCE IMAGE TO FIRST MODEL    S203

CALCULATE FIRST ESTIMATION TARGET FEATURE AND FIRST ESTIMATION REFERENCE FEATURE    S204

REDUCE DIMENSIONS OF FIRST ESTIMATION TARGET FEATURE AND FIRST ESTIMATION REFERENCE FEATURE    S205

ACQUIRE FIRST ESTIMATION PROCESSING INFORMATION    S206

INPUT ESTIMATION TARGET IMAGE AND ESTIMATION REFERENCE IMAGE TO SECOND MODEL    S207

CALCULATE SECOND ESTIMATION TARGET FEATURE AND SECOND ESTIMATION REFERENCE FEATURE    S208

ACQUIRE SECOND ESTIMATION PROCESSING INFORMATION    S209

PROCESS ESTIMATION TARGET IMAGE    S210

( END )

( END )

Europäisches
Patentamt

European
Patent Office

Office européen
des brevets

**EUROPEAN SEARCH REPORT**

Application Number

EP 25 21 9095

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG WEIGUANG ET AL: "Coarse-to-Fine Document Image Registration for Dewarping", 11 September 2024 (2024-09-11), DOCUMENT ANALYSIS AND RECOGNITION - ICDAR 2024; [LECTURE NOTES IN COMPUTER SCIENCE; LECT.NOTES COMPUTER], SPRINGER NATURE SWITZERLAND, CHAM, PAGE(S) 343 - 358, XP047708843, ISSN: 0302-9743 ISBN: 978-3-031-70545-8 [retrieved on 2024-09-11] | 1,2,4-12 | INV. G06V10/24 G06V10/44 G06V10/75 G06V10/774 G06V10/82 G06V30/146 G06V30/19 |
| A | * abstract * * figures 2-8 * * page 347, paragraph 4 - page 356, paragraph 2 * | 3 | |
| X | JIAXIN ZHANG ET AL: "DocAligner: Annotating Real-world Photographic Document Images by Simply Taking Pictures", ARXIV.ORG, CORNELL UNIVERSITY LIBRARY, 201 OLIN LIBRARY CORNELL UNIVERSITY ITHACA, NY 14853, 9 June 2023 (2023-06-09), XP091534435, | 1,2,4-12 | TECHNICAL FIELDS SEARCHED (IPC) G06V |
| A | * abstract * * figures 1, 2, 5, 6, 8, 9 * * page 3, column 1, paragraph 4 - page 6, column 2, paragraph 1 * * page 8, column 2, paragraph 1 - page 9, column 1, paragraph 1 * | 3 | |

The present search report has been drawn up for all claims

| Place of search | Date of completion of the search | Examiner |
|---|---|---|
| The Hague | 26 January 2026 | Konya, Iuliu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020008628 A1